**Europäisches Patentamt**

**European Patent Office**

**Office européen des brevets**

(19)

(11) Veröffentlichungsnummer: **0 012 219**
**A1**

(12) # EUROPÄISCHE PATENTANMELDUNG

(21) Anmeldenummer: **79104368.0**

(22) Anmeldetag: **07.11.79**

(51) Int. Cl.³: **H 02 J 3/38,** G 06 F 15/56

(30) Priorität: **08.11.78 DE 2848413**

(43) Veröffentlichungstag der Anmeldung: **25.06.80**
**Patentblatt 80/13**

(84) Benannte Vertragsstaaten: **AT BE CH FR GB IT NL SE**

(71) Anmelder: **Ad. Strüver KG (GmbH & Co.), Niendorfer Weg 11, D-2000 Hamburg 61 (DE)**

(72) Erfinder: **Philipsen, Horst, Nibelungenring 28, D-2200 Elmshorn (DE)**
Erfinder: **Krause, Rudolf, Dorfkoppel 3, D-2000 Hamburg 65 (DE)**

(74) Vertreter: **Nau, Walter, Dipl.-Ing., Körberstrasse 1, D-5000 Köln 50 (DE)**

(54) **Verfahren und Vorrichtung zum lastabhängigen Zu- und Abschalten mehrerer parallel betriebenen Stromversorgungsaggregate in einem Stromversorgungssystem.**

(57)  In ein Energiesystem mit stark wechselnder Verbraucherlast speist je nach benötigter Energiemenge eine bestimmte Anzahl von Stromversorgungsaggregaten eines Parallelverbandes ein.

Zur Erzielung einer gleichmäßigen Betriebszeitverteilung auf alle Stromversorgungsaggregate werden die Stromversorgungsaggregate in einem bestimmten Betriebszyklus nacheinander in die dauernd in Betrieb befindliche Gruppe der Stromversorgungsaggregate zu- und abgeschaltet.

5000 Köln 80, den 05. November 1979
Unser Zeichen: D 72/70 AG-XPB Ca/Bi

## BEZEICHNUNG GEÄNDERT
### siehe Titelseite

Verfahren zum lastabhängigen Zu- und Abschalten
von mehreren parallel betriebenen Stromversorgungsaggregaten in einem Stromversorgungssystem

------------------------------------------------

Die Erfindung bezieht sich auf ein Verfahren zum lastabhängigen Zu- und Abschalten von mehreren parallel betriebenen Stromversorgungsaggregaten in einem Stromversorgungssystem.

Es ist allgemein bekannt, bei der Projektierung von
elektrischen Energiezentralen aus Gründen der Verfügbarkeit
und Wirtschaftlichkeit die gesamte benötigte Energie auf
mehrere, einzelne, parallellaufende Stromversorgungsaggregate
aufzuteilen. Bei Energiesystemen mit stark wechselnder Verbraucherlast kann es hierbei notwendig sein, bis zu 10 Stromversorgungsaggregate im Parallelverband zu betreiben. Hierbei
werden im allgemeinen ein oder zwei Stromversorgungsaggregate
als Reserveaggregate vorgesehen, die bei einer Störung eines
im Betrieb befindlichen Stromversorgungsaggregates für dieses
einspringen und die Energieversorgung sicherstellen. In Zeiträumen mit geringer Last, z. B. während der Nachtzeit, werden
aus Gründen der Wirtschaftlichkeit nur ein oder zwei Stromversorgungsaggregate betrieben. Bei steigender Verbraucherlast, z. B. während der Morgenstunden, werden je nach Lastanfall zu dem laufenden Verband von Stromversorgungsaggregaten
weitere Stromversorgungsaggregate zusynchronisiert.

Systeme dieser Art arbeiten im allgemeinen mit einer Vorrangsteuerung, die ein vorwählbares Stromversorgungsaggregat als Führungsaggregat festlegt und bei steigender
Verbraucherlast weitere Stromversorgungsaggregate anwählt.
Dabei kommt es für die einzelnen Stromversorgungsaggregate
bei dem zu erwartenden Betriebswechsel zu sehr unterschiedlichen Betriebszeiten. In einem Stromversorgungssystem mit beispielsweise acht Stromversorgungsaggregaten
arbeiten die Stromversorgungsaggregate 1 und 2 im Dauerbetrieb, während die Stromversorgungsaggregate 6 und 7 nur
bei hoher Verbraucherlast zugeschaltet werden und das
Stromversorgungsaggregat 8 gar nicht an der Energieversorgung teilnimmt. Außerdem werden die in den letzten
Rangstellen arbeitenden Stromversorgungsaggregate hierbei längere Zeit unter Teillastbedingungen gefahren, wo -
raufhin bei den Brennkraftmaschinen der Stromversorgungsaggregate eine Verkokung der Verbrennungsräume auftreten
kann. Da sich durch diese Art der Steuerung eine sehr ungleiche Betriebszeitverteilung mit dem Nachteil des unterschiedlichen Verschleißes der Stromversorgungsaggregate
ergibt, ist man gezwungen, in bestimmten Zeitabständen
manuell ein anderes Stromversorgungsaggregat als Führungsaggregat anzuwählen.

Bei Störung eines vorgewählten Führungsaggregates muß
allerdings die Steuerung automatisch ein anderes Stromversorgungsaggregat als Führungsaggregat festlegen, wodurch zwangsläufig wiederum eine Verschiebung der Betriebszeitverteilung aller Stromversorgungsaggregate entsteht.
Soll nach der Behebung einer längeren Störung das gestörte
Stromversorgungsaggregat an die Betriebszeit der anderen
Stromversorgungsaggregate wieder herangeführt werden, so

-3-

STRÜVER HAMBURG

05.11.1979
D 76/70

muß das Stromversorgungsaggregat zum Führungsaggregat erklärt werden, wodurch wiederum eine Verschiebung der Betriebszeitverteilung aller übrigen Stromversorgungsaggregate eintritt.

Die der Erfindung zugrundeliegende Aufgabe besteht somit darin, unter Vermeidung vorstehender Schwierigkeiten ein Verfahren zu schaffen, durch das allgemein eine gleichmäßige Betriebszeitverteilung für alle zu dem Stromversorgungssystem gehörenden Stromversorgungsaggregate vorhanden ist, wobei sämtliche innerhalb des Stromversorgungssystems auftretenden Störgrößen sicher erfaßt werden.

Diese Aufgabe wird bei einem Verfahren der in Rede stehenden Gattung durch die im Kennzeichen des Anspruchs 1 aufgeführten Merkmale gelöst.

Danach werden sämtliche Stromversorgungsaggregate durch ein umlaufendes Zu- und Abschaltprogramm nacheinander mit in die Energieversorgung einbezogen. Nach Beendigung einer Betriebsphase, beispielsweise bei Notstromaggregaten nach Wiederkehr der Netzspannung, werden bei erneutem Netzausfall bevorzugte Aggregate angewählt, die in der vorherigen Betriebsphase in Warteposition standen. Die Verbraucherlast wird dabei in eine bestimmte Anzahl von Laststufen aufgeteilt, wobei jede einzelne Laststufe einen fest vorgegebenen Wert hat. Die Einzelverbraucherlast der jeweiligen Laststufen ist auf die Leistung der Aggregate abgestimmt, vorzugsweise entspricht eine Laststufe dem Leistungsvermögen eines Stromversorgungsaggregates.

In einer Ausgestaltung der Erfindung wird der Betriebszyklus der Aggregate durch die während des Betriebsablaufes entstehenden Laständerungen durch ein umlaufendes Zu- und Abschaltprogramm selbständig gesteuert. Dieses Programm wird bei Störung eines Aggregates nicht beeinflußt, vielmehr wird das gestörte Stromversorgungsaggregat lediglich vom umlaufenden Zu- und Abschaltprogramm übersprungen. Nach Behebung der Störung wird dieses Aggregat automatisch in den Betriebszyklus wieder aufgenommen und kann durch eine Grundlastschaltung im Dauerbetrieb an die Betriebszeit der übrigen Stromversorgungsaggregate wieder angeglichen werden, ohne daß die Betriebszeitverteilung der anderen Aggregate beeinflußt wird.

Weiterhin ist vorgesehen, daß Zu- und Abschaltprogramm so zu gestalten, daß, in Abhängigkeit vom Lastwechsel, einer Gruppe im Betrieb befindlicher Stromversorgungsaggregate in Ablaufrichtung des Programms ein weiteres Stromversorgungsaggregat zugeschaltet oder am Ende der Gruppe ein Stromversorgungsaggregat abgeschaltet wird. Bei 8 vorhandenen Stromversorgungsaggregaten, die 8 möglichen Laststufen gegenübergestellt sind, käme es bei Lastwechsel zu folgenden Schaltschritten: Sind die Aggregate 1 - 5 beispielsweise in Betrieb und tritt eine Erhöhung der Verbraucherlast ein, so wird das Aggregat 6 zugesetzt. Sinkt die Verbraucherlast ab, so wird das Aggregat 1 abgesetzt und erst wieder nach dem Aggregat 8 in die Gruppe aufgenommen.

In weiterer Ausgestaltung der Erfindung ist vorgesehen, das erfindungsgemäße Verfahren durch eine vollautomatische Vorrichtung durchzuführen. Zur Realisierung des Zu- und

0012219
STRÜVER HAMBURG

Abschaltprogramms weist die Vorrichtung eine Signalkette auf, die aus einem Meßgerät für die Verbraucherlast, einem Laststufenerfasser, einem Laststufen-Auswerter besteht, die gemeinsam mit einem Betriebszustandsmelder zu einem Größer/Kleiner-Vergleicher führen, wobei sich die Signalkette fortsetzt zu einem Zusetzer, Absetzer und Ausgangsstufen, die die Start/Stop-Einrichtung der einzelnen Stromversorgungsaggregate beeinflussen.

Parallel zu dieser Signalkette ist eine weitere Signalkette vorgesehen, die sich aus Laststufen-Erfasser, Größer/Kleiner-Vergleicher sowie einem Frequenzmeßrelais zusammensetzt, die bei Überschreitung der max. zur Verfügung stehenden Aggregatleistung durch die Verbraucherlast oder bei Unterfrequenzen zusätzliche Abschaltregister für Lastabwurfsstufen aktivieren. Besteht Ungleichgewicht, d. h. stehen weniger Stromversorgungsaggregate ungestört zur Verfügung, als Laststufen gefordert werden, so wird ein Signal an das Abschaltregister gegeben. Das Frequenzmeßrelais registriert Unterfrequenzen an der Verbraucherschiene, hervorgerufen durch Überlastung der Stromversorgungsaggregate und signalisiert diese ebenfalls dem Abschaltregister.

In einer weiteren Ausgestaltung der Erfindung kann über ein übergeordnetes Programm, das den Signalen des Betriebszustandsmelders überlagert wird, das Zusetzen und Absetzen der Stromversorgungsaggregate beeinflußt werden. Hierbei kann in einer bestimmten Rang- bzw. Reihenfolge durch einen in der Vorrichtung vorhandenen Programmgeber,

-6-

05.11.1979
D 78/70

beispielsweise in Abhängigkeit von bestimmten Betriebssituationen oder in Abhängigkeit von den Aufzeichnungen
eines Betriebsstundenzählers, geschaltet werden.

Zur weiteren Erläuterung wird auf die Zeichnung verwiesen, in der ein Ausführungsbeispiel der Vorrichtung
vereinfacht dargestellt ist. Es zeigen:

Fig. 1 ein Blockschaltbild einer Vorrichtung zur Durchführung des Verfahrens gemäß der Erfindung,

Fig. 2 einen Signalgeber für acht Laststufen und acht
parallel betriebene Stromversorgungsaggregate und

Fig. 3 die Betriebszeitverteilung der Stromversorgungsaggregate in einem Koordinatensystem.

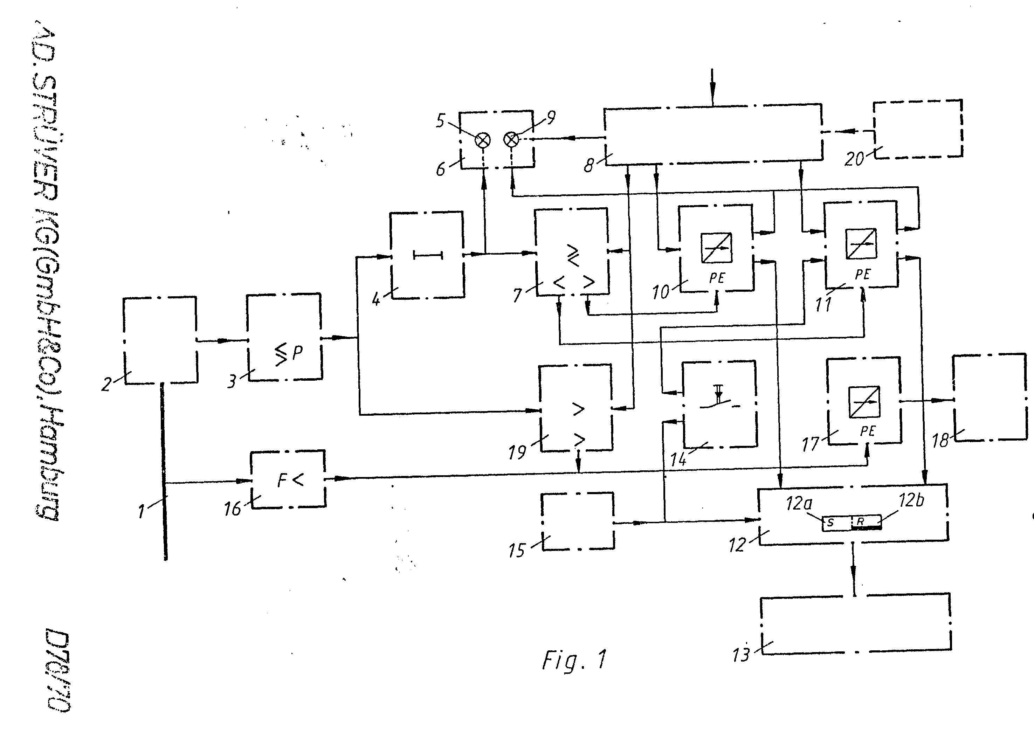

In der Fig. 1 ist anhand eines Blockschaltbildes der Aufbau der Vorrichtung für mehrere Stromversorgungsaggregate
erläutert. Dabei ist mit 1 eine Verbraucherschiene eines
Stromversorgungssystems bezeichnet, an die ein Meßgerät 2
zur Bestimmung der Verbraucherlast angeschlossen ist. Dem
Meßgerät sind die Laststufenerfasser 3 und Laststufenauswerter 4 nachgeschaltet, wobei der Laststufenauswerter 4
mit einer Laststufenanzeige 5 eines Signalgebers 6 in Verbindung steht. Weiterhin schließt sich an den Laststufenauswerter 4 ein Größer/Kleiner-Vergleicher 7 an, dem
Signale eines Betriebszustandsmelders 8, beispielsweise
Angaben über die Anzahl der auf der Verbraucherschiene
arbeitenden Aggregate und Störungen von Stromversorgungsaggregaten, zugeführt werden. Über eine nachgeschaltete
Generatoranzeige 9 des Signalgebers 6 wird der Betriebs-

-7-

zustand der einzelnen Stromversorgungsaggregate angezeigt. Weiterhin sind dem Größer/Kleiner-Vergleicher 7 Signaleingänge PE eines Zusetzers 10 und eines Absetzers 11 nachgeschaltet, die im Signalfluß zu Ausgangsstufen 12 stehen. Diese Ausgangsstufen 12 diesen mit einem Seztteil 12a und einem Rücksetzteil 12b zur Steuerung der Start/Stop-Einrichtungen 13 der Stromversorgungsaggregate. Der Zusetzer 10 und der Absetzer 11 sind außerdem über Eingänge an den Betriebszustandsmelder 8 und über Ausgänge an den Signalgeber 6 angeschlossen.

Weiterhin sind dem Absetzer 11 und den Ausgangsstufen 12 Steuersignale eines Grundlastwahlschalters 14 zugeordnet, zu denen für die Ausgangsstufen 12 parallel ein Geber 15 für übergeordnete Setzsignale angeordnet ist.

Zusätzlich zu der beschriebenen Schaltungsanordnung ist an die Verbraucherschiene 1 eine Signalkette gelegt, die aus einem Frequenzmeßrelais 16 und einem Abschaltregister 17 zu Lastabwurfsstufen 18 führt. Parallel zu dieser Signalkette ist ein an den Laststufen-Erfasser angeschlossener Größer-Vergleicher 19 vorgesehen, dem Meßwerte vom Laststufenerfasser 3 und Betriebszustandsmelder 8 zugeführt werden, in Verbindung mit dem Abschaltregister 17. Dabei besteht auch die Möglichkeit, parallel zu dem Abschaltregister 17 ein zusätzliches Zuschaltregister anzuordnen.

Der Betriebszustandsmelder 8 kann außerdem mit einem Programmgeber 20 verbunden werden, der beispielsweise zur Erfassung der Betriebszeit der einzelnen Stromversorgungsaggregate mittels Betriebsstundenzähler dienen kann und dem Betriebszustandsmelder 8 entsprechende Signale zuführt.

-8-

Der Ablauf des erfindungsgemäßen Verfahrens mit Hilfe der Vorrichtung gemäß dem in Fig. 1 dargestellten Blockschaltbild ist folgender:

Im Meßgerät 2 wird die an die Verbraucherschiene 1 anliegende Verbraucherlast gemessen und im Laststufenerfasser 3 auf Laststufen, die vorzugsweise den Leistungen der Stromversorgungsaggregate entsprechen, aufgeteilt und sodann dem Laststufenauswerter 4 zugeführt. Im Laststufenauswerter 4 werden die Laststufensignale über Zeitglieder verzögert und an den Größer/Kleiner-Vergleicher 7 weitergeleitet. Die vom Laststufenauswerter 4 kommenden Signale werden im Größer/Kleiner-Vergleicher 7 mit den aus dem Betriebszustandsmelder 3 ausgewerteten Signalen verglichen. Besteht kein Gleichgewicht, d. h. arbeiten weniger oder mehr Stromversorgungsaggregate an der Verbraucherlast als vom Laststufenauswerter 4 gefordert, so erfolgt ein Größer- oder Kleiner-Signal am Ausgang des Größer/Kleiner-Vergleichers 7. Hierdurch wird der Signaleingang PE des als Schieberegister aufgebauten Zusetzers 10 bzw. Absetzers 11 aktiviert. Die Adress-Eingänge und die Adress-Ausgänge des Zusetzers 10 und des Absetzers 11 sind den einzelnen Stromversorgungsaggregaten zyklisch zugeordnet. Die Adress-Eingänge des Zusetzers 10 sind mit Signalen des Betriebszustandmelders 3 in der Weise belegt, daß nur dort Signale liegen, wo Stromversorgungsaggregate zuschaltbar sind, d. h. Generatorschalter nicht eingeschaltet und keine Störung vorhanden ist bzw. auf den Adress-Eingängen des Absetzers 11 nur dort Signale liegen, wo Aggregate abschaltbar sind, d. h. der jeweilige Generator-Schalter eingeschaltet ist. Bei Vorliegen eines PE-Signals am Zusetzer 10 oder am Absetzer 11 wird das an den Adress-Eingängen entstehende Signal nacheinander in Taktschritten auf die zugeordneten Adress-Ausgänge durchgeschaltet, wodurch die den einzelnen Aggregaten zugeordneten Ausgangsstufen 12 über Setzteile 12a bzw. Rücksetzteile 12b setzen bzw. rücksetzen und die Start/Stop-Einrichtungen 13 ansteuern. Der Taktschritt wird in dem Moment zum Halten gebracht, in dem über den Größer/Kleiner-Vergleicher 7 Gleichgewicht hergestellt und damit das PE-Signal am Zusetzer 10 oder am Absetzer 11 gelöscht ist. Bei erneutem PE-Signal, bedingt durch Laständerungen am Laststufenerfasser 3, wird gemäß der vorher erreichten Stellung der Schieberegister des Zusetzers 10 sowie des Absetzers 11 das im Zyklus nächste Stromversorgungsaggregat zugesetzt bzw. abgesetzt.

Die den einzelnen Stromversorgungsaggregaten zugeordneten Adress-Eingänge des Absetzers 11 können, z. B. nach längerer Störung eines Stromversorgungsaggregates, außerdem durch Signale aus dem Grundlastwahlschalter 14 belegt werden. Parallel hierzu wird der zugeordneten Ausgangsstufe 12 ein übergeordnetes Setz-Signal zugeführt. Das Signal auf dem zugeordneten Eingang des Absetzers 11 hat zur Folge, daß der zugeordnete Adress-Eingang des Absetzers 11 übersprungen und das Stromversorgungsaggregat somit nicht abgesetzt wird, sondern das im Zyklus an nächster Stelle arbeitende Stromversorgungsaggregat über Absetzer 11 und zugeordnete Ausgangsstufen abgesetzt wird.

Der Größer-Vergleicher 19, dem die aus dem Laststufenerfasser 3 kommenden Signale unverzögert zugeführt werden, vergleicht diese mit dem jeweiligen Betriebszustand der Stromversorgungsaggregate über den Betriebszustandsmelder 8. Besteht Ungleichgewicht, d. h. stehen insgesamt weniger Stromversorgungsaggregate ungestört zur Verfügung, als Laststufen gefordert werden, so wird ein PE-Signal an das Abschaltregister 17 gegeben. Gleiches gilt, wenn das Frequenzmeßrelais 16 an der Verbraucherschiene 1 eine durch Überlastung der Stromversorgungsaggregate hervorgerufene Unterfrequenz registriert. Das Abschaltregister 17 ist ebenfalls als Schieberegister aufgebaut, jedoch mit interner Nullstellung und freiem Durchlauf. Steht kein PE-Signal an, so steht das Schieberegister grundsätzlich in der internen Nullstellung. Bei vorliegendem PE-Signal werden über die Adress-Ausgänge des Abschaltregisters 17 in vorgegebener Reihenfolge Lastabwurfssignale an die Lastabwurfsstufen 18 gegeben. Wurden so viel Lastabwurfstufen abgeschaltet, daß das PE-Signal vom Größer-Vergleicher 19 bzw. Frequenzmeßrelais 16 gelöscht ist, so springt das Schieberegister des Abschaltregisters 17 in die interne Nullstellung zurück, wodurch alle vorher anstehenden Lastabwurfssignale gelöscht werden. Zweckmäßigerweise werden die Lastabwurfsstufen 18 nach Wertigkeit geordnet. Die Anpassung der Leistung der einzelnen Lastabwurfstufen an die Leistungsgröße der im Verband arbeitenden Aggregate ist vorteilhaft. Selbstverständlich kann in einer weiteren Ausgestaltung der Erfindung ein nicht dargesteller Zuschalter parallel zum Abschalter 17 angeordnet werden. Das Zuschaltprogramm wird beispielsweise dann eingeleitet, wenn nach dem Start der Aggregate selbständig automatische Lastzuschaltungen durchgeführt werden sollen. In vorteilhafter Weise wird dabei die Leistung der einzelnen Lastzuschaltstufen an die Leistung der einzelnen Stromversorgungsaggregate angepaßt sein.

Über den Geber 15 können übergeordnete Setzsignale direkt auf die Ausgangsstufen gegeben werden. Dieses kann beispielsweise bei Anlagen mit Anlaufsynchronisation, bei denen alle Stromversorgungsaggregate gleichzeitig gestartet werden, notwendig sein. Erst nach Zuschalten auf die Verbraucherschiene 1 wird dann über den Laststufenerfasser 3 festgestellt, welche Stromversorgungsaggregate aufgrund der Lastverhältnisse wieder von der Verbraucherschiene 1 abgeschaltet werden können.

In dem Signalgeber 6 werden die vom Laststufenauswerter 4 geforderten Laststufen den vom Betriebszustandsmelder 2 gemeldeten Betriebszuständen auf Laststufenanzeigen 5 und Generatoranzeigen 9 in Form von Lichtsignalen gegenübergestellt. Die jeweilige Stellung der Schieberegister des Zusetzers 10 und des Absetzers 11 wird zusätzlich zur Signalisation des Betriebszustandes herangezogen.

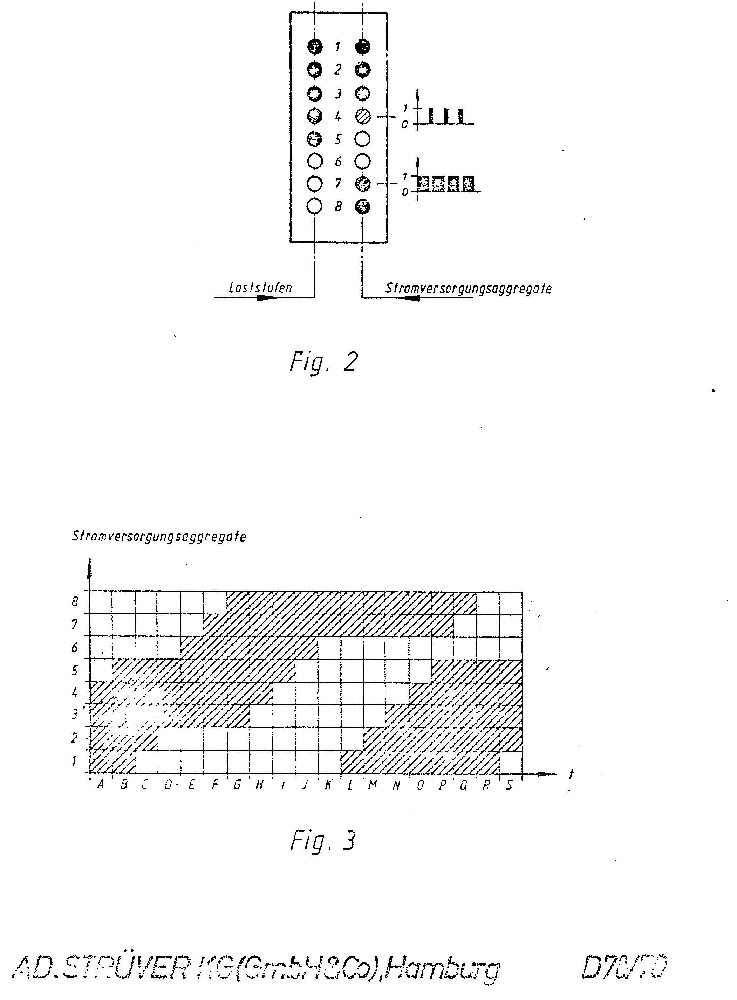

In der Fig. 2 ist das sich ergebende Signalbild für acht Stromversorgungsaggregate wiedergegeben. Das Betriebspersonal erhält aus dem Signalbild eine umfassende Information, wieviel Laststufen in Beziehung zur Betriebssituation der Stromversorgungsaggregate anstehen, wobei durch Blinklicht zu erkennen ist, welches Aggregat bei Laststeigerung als nächstes zugesetzt bzw. bei Lastabsenkung abgesetzt wird. In dem dargestellten Signalbild stehen den geforderten Laststufen 1 bis 5 die Stromversorgungsaggregate 7 und 6 sowie 1 bis 3 gegenüber. Das Signal Dauerlicht bei den Stromversorgungsaggregaten 1, 2, 3 und 8 bedeutet dabei: Stromversorgungsaggregat im Betrieb, Generatorschalter ein. Das Signal Nullicht für die Stromversorgungsaggregate 5 und 6 bedeutet: Stromversorgungsaggregate nicht in Betrieb, Generatorschalter aus. Das Signal Blinklicht mit kurzen Nullichtphasen für das Stromversorgungsaggregat 7 bedeutet: Stromversorgungsaggregat in Betrieb, Generatorschalter ein, Stromversorgungsaggregat bei Lastsenkung für Lastabschaltung vorgesehen. Das Signal Blinklicht mit langen Nullichtphasen für das Stromversorgungsaggregat 4 bedeutet: Stromversorgungsaggregat nicht in Betrieb, Generatorschalter aus, Stromversorgungsaggregat bei Lasterhöhung für Zuschaltung vorgesehen.

Die Fig. 3 zeigt die sich bei einer Vorrichtung der beschriebenen Art ergebenden Betriebswechsel und Verteilung der Betriebszeiten in einem Koordinatensystem. Auf der Ordinate sind dabei die Stromversorgungsaggregate 1 bis 8 eingetragen, während die fortlaufende Buchstabenreihe von A bis S auf der Abzisse jeweils Zeiteinheiten angibt. Aus der Darstellung ist zu erkennen, daß gegenüber den bekannten Steuerungen, die mit Vorrangsteuerung und Führungsaggregat arbeiten, die Verteilung der Betriebszeiten auf die einzelnen Stromversorgungsaggregate ohne manuellen Eingriff wesentlich gleichmäßig erfolgt. Während des dargestellten Betriebszyklusses wird jedes Stromversorgungsaggregat längere Zeit an der Energieversorgung beteiligt.

STRÜVER HAMBURG

-13-                    05.11.1979
                        D 78/70


P a t e n t a n s p r ü c h e
--------------------------------

1.    Verfahren zum lastabhängigen Zu- und Abschalten
von mehreren parallel betriebenen Stromversorgungsaggregaten
in einem Stromversorgungssystem,
dadurch gekennzeichnet, daß die einzelnen Stromversorgungsaggregate nach einem Betriebszyklus des Stromversorgungssystems arbeiten, bei dem alle Stromversorgungsaggregate
nacheinander derart in die dauernd in Betrieb befindliche
Gruppe der Stromversorgungsaggregate zu- und abgeschaltet
werden, daß alle Stromversorgungsaggregate etwa die gleiche
Zeit betrieben werden.

2.    Verfahren nach Anspruch 1,
dadurch gekennzeichnet, daß die Verbraucherlast in eine
bestimmte Anzahl von Laststufen aufgeteilt wird, deren Anteil an der Verbraucherlast auf die jeweilige Leistung
der Stromversorgungsaggregate abgestimmt ist.

3.    Verfahren nach einem der vorhergehenden Ansprüche,
dadurch gekennzeichnet, daß das Zu- und Abschalten der
Stromversorgungsaggregate durch nacheinander abwechselnde
Taktschritte in Form von Zu- und Absetzsignalen in Verbindung mit Lastwechseln erfolgt.

4.    Verfahren nach einem der vorhergehenden Ansprüche,
dadurch gekennzeichnet, daß, bezogen auf die Ablaufrichtung
des Zu- und Abschaltprogramms, beim Betrieb einer Gruppe
von Stromversorgungsaggregaten bei der Zuschaltung ein der

-14-

Gruppe am Anfang benachbartes Stromversorgungsaggregat zugesetzt und bei der Abschaltung ein am Ende der Gruppe
betriebenes Stromversorgungsaggregat abgesetzt wird.

5.  Verfahren nach einem der vorhergehenden Ansprüche,
dadurch gekennzeichnet, daß nach der Wiedereinschaltung
eines längere Zeit aus dem Betriebszyklus abgeschalteten
Stromversorgungsaggregats eine Grundlastschaltung aktiviert
wird, durch die das wiederinstandgesetzte Stromversorgungsaggregat durch Dauerbetrieb an die Betriebszeit der übrigen
Stromversorgungsaggregate angeglichen wird, ohne daß die
Betriebszeitverteilung der übrigen Stromversorgungsaggregate
beeinflußt **wird.**

6.  Verfahren nach einem der vorhergehenden Ansprüche,
dadurch gekennzeichnet, daß die gesamte Verbraucherlast mit
der maximal zur Verfügung stehenden Generatorleistung der
Stromversorgungsaggregate verglichen wird und bei Ungleichgewicht bevorzugte Lastabwurfsstufen bzw. Lastzuschaltstufen ab- oder zugeschaltet werden.

7.  Verfahren nach einem der vorhergehenden Ansprüche,
dadurch gekennzeichnet, daß bei Unterfrequenz des Verbrauchersystems bevorzugte Laststufen abgeschaltet werden.

8.  Verfahren nach einem der vorhergehenden Ansprüche,
dadurch gekennzeichnet, daß die Betriebszeiten der einzelnen
Stromversorgungsaggregate in einem Programm miteinander verglichen werden und das taktweise Zu- und Abschalten nach
einer entsprechenden Rangfolge erfolgt.

9.    Vorrichtung zur Durchführung des Verfahrens nach einem der vorhergehenden Ansprüche, die ein die Verbraucherlast erfassendes Meßgerät und einen den Betriebszustand der Stromversorgungsaggregate kontrollierenden Betriebszustandsmelder aufweist, dadurch gekennzeichnet, daß an das Meßgerät (2) ein Laststufenerfasser (3) angeschlossen ist, der entsprechend der vorgesehenen Gesamtzahl von Laststufen zyklisch über einen Laststufenauswerter (4) mit einem Größer/Kleiner-Vergleicher (7) in Verbindung steht, der andererseits über eine der Zahl der Stromversorgungsaggregate entsprechende Anzahl von Eingängen an den Betriebszustandsmelder (8) angeschlossen ist, wobei der Größer/Kleiner-Vergleicher (7) über einen Zusetzer (10) bzw. Absetzer (11) mit die Start/Stop-Einrichtung (13) der Stromversorgungsaggregate beeinflussenden Ausgangsstufen (12) in Wirkverbindung steht.

10.    Vorrichtung nach einem der vorhergehenden Ansprüche, dadurch gekennzeichnet, daß an die Verbraucherschiene (1) ein Frequenzmeßrelais (16) angeschlossen ist, das gemeinsam mit einem parallel angeordneten Größervergleicher (19) zum Vergleich von Verbraucherlast und der zur Verfügung stehenden Generatorenleistung, der an den Laststufenerfasser (3) angeschlossen ist, mit einem Zu- und/oder Abschaltregister (17) für Lastabwurfsstufen bzw. -zuschaltstufen (18) in Verbindung steht.

11.    Vorrichtung nach einem der vorhergehenden Ansprüche, dadurch gekennzeichnet, daß die Ausgangsstufen (12) mit einem Geber (15) für übergeordnete Setzsignale, z. B. für Anlaufsynchronisation bei gleichzeitigem Start aller Stromversorgungsaggregate, in Verbindung steht.

12.     Vorrichtung nach einem der vorhergehenden Ansprüche, dadurch gekennzeichnet, daß an dem Betriebszustandsmelder (8) ein Programmgeber (20), insbesondere mit Betriebsstundenzähler, angeschlossen ist, dessen Programm den Signalen des Betriebszustandsmelders (8) überlagert ist.

Fig. 1

½

Laststufen    Stromversorgungsaggregate

Fig. 2

Stromversorgungsaggregate

Fig. 3

A.D.STRÜVER KG(GmbH&Co),Hamburg          D70/79

| | Europäisches Patentamt | **EUROPÄISCHER RECHERCHENBERICHT** | Nummer der Anmeldung EP 79 10 4368 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 235 743 (H.R. RYERSON et al.) <br><br> ＊ Das ganze Dokument ＊ <br><br> -- | 1-4,9 |
| | GB - A - 261 844 (THE GENERAL ELECTRIC COMP. LTD.) <br><br> ＊ Seite 1, Zeile 21 bis Seite 2, Zeile 25; Seite 5, Zeile 129 bis Seite 6, Zeile 30; Figur 2 ＊ <br><br> -- | 1,3,4 |
| | US - A - 3 300 647 (J.K. GOGIA et al.) <br><br> ＊ Spalte 1, Zeilen 10-13,38-48; Spalte 2, Zeile 1 bis Spalte 3, Zeile 42; Figuren 1,2 ＊ <br><br> -- | 1,3,8, 11 |
| | DE - A - 1 588 450 (LICENTIA PATENTVERWALTUNGS-GmbH) <br><br> ＊ Seiten 11-13; Ansprüche; Figur ＊ <br><br> -- | 2,6 |
| | LE JOURNAL DE L'EQUIPEMENT ELECTRIQUE ET ELECTRONIQUE, Nr. 287, Februar 1969, Paris, FR, "Un système analogique pour le délestage intelligent", Seiten 58-61 <br><br> ＊ Seite 59; Figur 3; Seite 60, rechte Spalte, Zeilen 5-31; Seite 61, linke Spalte, Zeilen 1-22 ＊ <br><br> ---- | 7,10 |

**KLASSIFIKATION DER ANMELDUNG (Int.Cl. 3)**

H 02 J  3/38
G 06 F  15/56

**RECHERCHIERTE SACHGEBIETE (Int. Cl. 3)**

H 02 J  3/38
          3/46
          3/48
          3/14
G 06 F  15/56

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort Den Haag | Abschlußdatum der Recherche 11-02-1980 | Prüfer POINT |

EPA form 1503.1  06.78